# FASCICULE DE BREVET EUROPEEN

(11) **EP 3 602 753 B1**
(45) Date de publication et mention de la délivrance du brevet: **24.11.2021**
(21) Numéro de dépôt: 18711121.6
(22) Date de dépôt: 19.03.2018
(51) Int. Cl.: H02K 11/40, H02K 5/22, H02K 29/00, H02K 11/33

(54) **PERFECTIONNEMENT A UNE MACHINE SYNCHRONE A AIMANTS PERMANENTS**
VERFEINERUNG EINER SYNCHRONMASCHINE MIT PERMANENTMAGNETEN
REFINEMENT OF A SYNCHRONOUS MACHINE WITH PERMANENT MAGNETS

(30) Priorité: 22.03.2017 FR 1752361
(43) Date de publication de la demande: 05.02.2020
(73) Titulaire: Selni, 58000 Nevers (FR); Delta Dore, 35270 Bonnemain (FR)
(72) Inventeur: FLOCCO, Bruno, 60300 Senlis (FR); VIDAL, Philippe, 03340 Neuilly-le-Real (FR); ROGER, Alain, 35430 Saint Jouan des Guérets (FR); FLAUX, Philippe, 35111 La Fresnais (FR); ROUTIER, Frédéric, 35760 Saint Grégoire (FR); CHOUANE, Philippe, 35740 Pace (FR); CHABANNES, André, 35270 Combourg (FR)
(74) Mandataire: Cabinet Le Guen Maillet
(86) Numéro de dépôt international: PCT/EP2018/056904
(87) Numéro de publication internationale: WO 2018/172291

(56) Documents cités:
- EP-A1- 2 355 310
- EP-A1- 2 378 644
- EP-A1- 2 750 267
- EP-A2- 0 565 312
- FR-A1- 3 004 034
- US-A1- 2012 223 604
- US-A1- 2015 333 595

## Description

### Domaine technique

La présente invention concerne une machine synchrone à aimants permanents tel qu'un moteur tubulaire à aimants permanents notamment destiné à être placé à l'intérieur d'un actionneur tubulaire pour des applications domotiques permettant notamment de dérouler et/ou enrouler des volets roulants, des toiles, des stores, des écrans ou similaires. Toutefois, le moteur suivant trouvera de nombreuses autres applications notamment pour l'entraînement d'outils électroportatifs tels qu'une ponceuse ou une perceuse par exemple, du tambour d'une machine à laver, etc...

### Etat de la technique

Dans le domaine des actionneurs électromécaniques permettant le pilotage motorisé des éléments d'occultation ou de protection solaire dans un bâtiment, tels que des volets roulants ou des stores, il est bien connu d'utiliser des moteurs électriques synchrones à commutation électronique de faible puissance dont les dimensions radiales sont réduites pour être intégré à un actionneur tubulaire.

De tels moteurs doivent présenter un couple important sous un faible encombrement radial de manière à pouvoir être intégré dans un tube d'enroulement de volet ou de store par exemple. Ainsi, les dimensions particulières incitent à réaliser des moteurs longs, la longueur du moteur compensant sa faible section pour obtenir la puissance nécessaire à l'entraînement du volet ou du store.

La plupart des moteurs utilisés pour ce type d'application consiste dans des moteurs asynchrones monophasés.

Ce type de moteur présente de nombreux inconvénients. Outre le fait que ces moteurs sont encombrants, ils présentent de piètres performances notamment au démarrage où il absorbe 4 à 8 fois son intensité nominale.

Afin de remédier à ces inconvénients, ces moteurs sont désormais remplacés par des moteurs dits brushless fonctionnant sans balais. Ces moteurs brushless comprennent un stator bobiné tandis que les aimants sont placés sur le rotor, un système électronique de commande assurant la commutation du courant dans les enroulements statoriques.

De tels moteurs sont notamment décrits dans les demandes de brevet européen EP 2 224 581 et EP 2 750 267 et dans la demande de brevet international WO 2012/123575.

Le document EP 2 224 581 décrit un moteur électrique tubulaire comprenant un corps de stator, équipé d'un noyau ferromagnétique et des enroulements respectifs, et un conducteur constitué par une tige insérée de manière coulissante et coaxiale dans le corps de stator. La tige comprend un ensemble d'aimants permanents répartis uniformément le long de l'axe longitudinal de ladite tige et alternant avec des éléments d'entretoise de raccordement en matériau ferromagnétique. Ledit noyau ferromagnétique a une structure modulaire comprenant une pluralité de modules ferromagnétiques adjacents réalisés par pressage de composites magnétique doux. Les enroulements qui sont, en particulier, des enroulements triphasés sont constitués de bobines toroïdales connectées à une source d'alimentation électrique par l'intermédiaire interposé de moyens pour commander les courants dans les enroulements eux-mêmes, lesdits moyens de commande étant constitués d'une carte électronique comprenant un usuel onduleur triphasé et des capteurs pour mesurer l'intensité du champ magnétique et étant disposé le long de l'une des parois longitudinale du corps du stator.

Outre le fait que la position de la carte électronique augmente l'encombrement du moteur, ce type de moteur présente l'inconvénient de générer un courant électromoteur susceptible d'altérer le bon fonctionnement du moteur ainsi que le circuit d'alimentation et/ou la carte électronique de commande.

Par ailleurs, le document WO2012/123575 décrit un moteur électrique comprenant un rotor et un stator bobiné, le rotor comprenant un arbre et deux disques montés fixes en rotation sur l'arbre et équipés d'aimants permanents, une portion, dite externe, du stator s'étendant au niveau de chaque disque axialement parallèlement à un axe de rotation du rotor et radialement au-delà de celui-ci en partant de l'axe. Ce stator comprend une pluralité de barres disjointes qui sont réalisées dans un matériau magnétiquement conducteur et dont certaines parties formant la portion externe du stator. Le stator comprend également une structure porteuse maintenant les barres fixes les unes par rapport aux autres, la structure porteuse étant montée avec possibilité de rotation sur l'arbre, axialement à l'extérieur des deux disques. La portion externe du stator s'étend parallèlement à l'axe de rotation, axialement à l'extérieur des disques du rotor, jusqu'au niveau de la structure porteuse. Ledit moteur comporte également une unité électronique de pilotage comprenant un circuit imprimé situé à l'une des extrémités du moteur et un ensemble de capteurs, par exemple des sondes à effet Hall, disposés à l'intérieur de la structure du moteur et montés sur le circuit imprimé grâce à des pattes.

De la même manière que précédemment, ce type de moteur brushless présente l'inconvénient de générer un courant électromoteur susceptible d'altérer le bon fonctionnement du moteur ainsi que le circuit d'alimentation et/ou la carte électronique de commande.

On connait également le document EP 2 784 923 qui décrit un actionneur électrique ou électromagnétique comprenant des moyens de raccordement de l'actionneur à un réseau, un circuit redresseur qui délivre sur deux sorties une alimentation électrique et un module de commutation de l'alimentation électrique délivrée par le circuit redresseur. Il comprend également un circuit de filtrage des perturbations électromagnétiques issues du module de commutation, et du réseau d'alimentation de l'actionneur ainsi qu'une enveloppe conductrice dans laquelle est logé au moins le module de commutation. Ledit circuit de filtrage comprend au moins un condensateur de mode commun et le module de commutation est raccordé aux sorties du circuit redresseur au moyen d'une première et d'une deuxième lignes électriques. Une seule des première et deuxième lignes électriques est raccordée, par au moins un condensateur de mode commun appartenant au circuit de filtrage, à l'enveloppe conductrice qui n'est pas raccordée à la terre. Ainsi, les perturbations conduites et/ou rayonnées sont réduites.

Toutefois, ce type d'actionneur nécessite une enveloppe conductrice, tel qu'un tube métallique ou un tube en plastique métallisé, et n'est pas optimal en terme de nombre de composants dans le circuit de filtrage des perturbations électromagnétiques ni de couts. C'est à ces inconvénients notamment que l'invention entend remédier..

### Divulguation de l'invention

L'un des buts de l'invention est donc de remédier à ces inconvénients en proposant un moteur électrique tubulaire à aimants permanents de conception simple et peu onéreuse et comportant des moyens de décharge des perturbations électromagnétiques générées par le circuit électronique de pilotage du flux électromagnétique dans le stator.

A cet effet, et conformément à l'invention, il est proposé une machine synchrone à aimants permanents selon la revendication 1.

On comprend bien que cette solution est très différente de celles de l'art antérieur dans la mesure où la décharge du courant électromoteur est réalisée par une liaison directe, par un fil conducteur, entre masse de l'électronique et le stator.

De préférence, ladite connexion électrique est obtenue par un conducteur électrique dont les extrémités sont connectées respectivement à la partie métallique du stator et à la piste négative du bus de la carte électronique, ladite piste négative du bus formant la masse.

Selon un premier mode de réalisation, la carte électronique comporte au moins un circuit redresseur dont les entrées sont connectées à la phase et au neutre respectivement d'un réseau électrique monophasé, un module de commutation connecté aux sorties du circuit redresseur au moyen de pistes conductrices et respectivement, au moins une self de mode commun positionnée sur les pistes conductrices respectivement entre les sorties du circuit redresseur et le module de commutation, un premier condensateur connecté entre les sorties du circuit redresseur et les entrées de la self de mode commun, un second condensateur connecté entre les sorties de la self de mode commun et le module de commutation et des moyens pour relier le circuit magnétique de la machine, à savoir la masse du stator de ladite machine, à la masse du circuit de la carte électronique, ladite masse correspondant à la piste négative de la carte électronique.

Selon un second mode de réalisation, la carte électronique comporte au moins un circuit redresseur dont les entrées sont connectées aux sorties d'au moins une self de mode commun, les entrées de la self de mode commun étant connectées à la phase et au neutre respectivement d'un réseau électrique par des pistes conductrices, un module de commutation connecté aux sorties du circuit redresseur au moyen de pistes conductrices, un premier condensateur connecté entre les entrées de la self de mode commun, un second condensateur connecté entre les sorties du circuit redresseur et le module de commutation et des moyens pour relier le circuit magnétique de la machine, à savoir la masse du stator de ladite machine, à la masse du circuit de la carte électronique, ladite masse correspondant à la piste négative de la carte électronique.

Selon un troisième mode de réalisation, la carte électronique comporte des moyens de raccordement à une source d'alimentation en courant continu, un module de commutation connecté aux bornes de la source d'alimentation en courant continu au moyen de pistes conductrices et respectivement, au moins une self de mode commun positionnée sur les pistes conductrices respectivement entre les sorties du circuit redresseur et le module de commutation, un premier condensateur connecté entre les sorties du circuit redresseur et les entrées de la self de mode commun, un second condensateur connecté entre les sorties de la self de mode commun et le module de commutation et des moyens pour relier le circuit magnétique de la machine, à savoir la masse du stator de ladite machine, à la masse du circuit de la carte électronique, ladite masse correspondant à la piste négative de la carte électronique.

De préférence, la carte électronique comporte des selfs connectées entre le module de commutation et les bornes de la machine afin d'aider à filtrer les perturbations électromagnétiques.

### Brève description des dessins

D'autres avantages et caractéristiques ressortiront mieux de la description qui va suivre de plusieurs variantes d'exécution, données à titre d'exemples non limitatifs, du moteur électrique tubulaire à aimants permanents conforme à l'invention, en référence aux dessins annexés sur lesquels :
- la figure 1 est une vue en perspective partielle du moteur électrique suivant l'invention,
- la figure 2 est une vue en coupe longitudinale partielle du moteur électrique à aimants permanents suivant l'invention
- la figure 3 est une vue en perspective éclatée partielle du moteur électrique à aimants permanents et de sa carte électronique de commande suivant l'invention,
- la figure 4 est une représentation schématique de la carte électronique de commande du moteur électrique à aimants permanents suivant l'invention,
- la figure 5 est une représentation schématique des moyens de décharge des perturbations électromagnétiques générées par le circuit électronique de pilotage du flux électromagnétique dans le stator suivant l'invention,
- la figure 6 est une représentation schématique du circuit de la carte électronique de commande du moteur électrique à aimants permanents suivant l'invention,
- la figure 7 est une représentation schématique d'une première variante d'exécution du circuit de la carte électronique de commande du moteur électrique à aimants permanents suivant l'invention,
- la figure 8 est une représentation schématique d'une seconde variante d'exécution du circuit de la carte électronique de commande du moteur électrique à aimants permanents suivant l'invention,
- la figure 9 est une représentation schématique d'une troisième variante d'exécution du circuit de la carte électronique de commande du moteur électrique à aimants permanents suivant l'invention,
- la figure 10 est une représentation schématique d'une dernière variante d'exécution du circuit de la carte électronique de commande du moteur électrique à aimants permanents suivant l'invention.

### Mode de réalisation de l'invention

Dans la suite de la description la machine synchrone à aimants permanents consiste en un moteur électrique à aimants permanents et les mêmes références numériques désignent les mêmes éléments. Les différentes vues ne sont pas nécessairement tracées à l'échelle. Par ailleurs, le moteur électrique à aimants permanents est particulièrement destiné aux actionneurs tubulaires pour volets roulants ou stores notamment ; toutefois, il est bien évident que le moteur électrique à aimants permanents suivant l'invention pourra trouver de nombreuses applications notamment dans le domaine des automatismes sans pour autant sortir du cadre de l'invention.

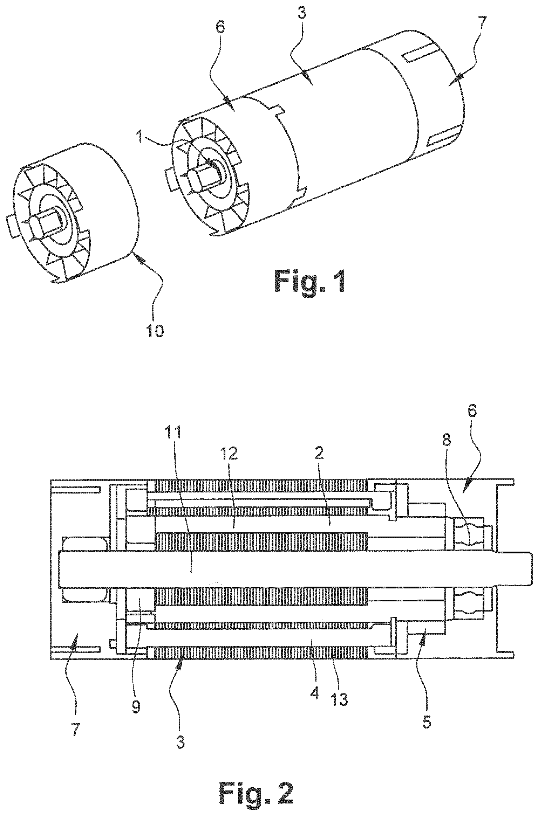

En référence aux figures 1 à 3, le moteur électrique à aimants permanents suivant l'invention est constitué d'un rotor 1 comprenant un aimant permanent en plastoferrite 2 s'étendant à travers un stator 3 portant une pluralité de bobines 4 et accessoirement un frein 5, l'ensemble s'étendant entre un flasque avant 6 et un flasque arrière 7 portant des paliers 8 et 9 sur lesquels prend appui le rotor 1. Le moteur comporte également un réducteur 10 qui, dans cet exemple particulier de réalisation, est un réducteur épicycloïdal ; toutefois, il est bien évident que le réducteur 10 pourra consister dans tout réducteur bien connu de l'homme du métier sans pour autant sortir du cadre de l'invention.

Le rotor 1 est constitué d'un cylindre en plastoferrite aimanté 2, emmanché et collé sur un arbre 11, ledit cylindre en plastoferrite 2 s'étendant entre les deux paliers 8 et 9 solidaires dudit arbre 11. On entend par « plastoferrite », couramment appelé Feplast, un matériau composé de poudre de ferrite mélangée à un liant thermoplastique. Il est bien évident que le cylindre en plastoferrite 2 suivant l'invention pourra être obtenu par tout procédé de moulage et/ou d'usinage d'un matériau plastoferrite bien connu de l'homme du métier.

De préférence, la paroi intérieure du cylindre en plastoferrite 2 est collée sur la paroi extérieure d'un corps de base 12 cylindrique, coaxial et solidaire de l'arbre 11 du moteur. Ledit cylindre en plastoferrite 2 est collé sur le corps de base 12 cylindrique au moyen d'une colle cyanoacrylate bien connu de l'homme du métier ou au moyen de toute autre colle adaptée bien connue de l'homme du métier telle qu'une colle époxy par exemple.

Par ailleurs, le cylindre en plastoferrite 2 pourra être substitué par un cylindre en plastonéodyme, par exemple, qui est un matériau composé de poudre de néodyme mélangée à un liant thermoplastique et qui est couramment appelé Neoplat sans pour autant sortir du cadre de l'invention.

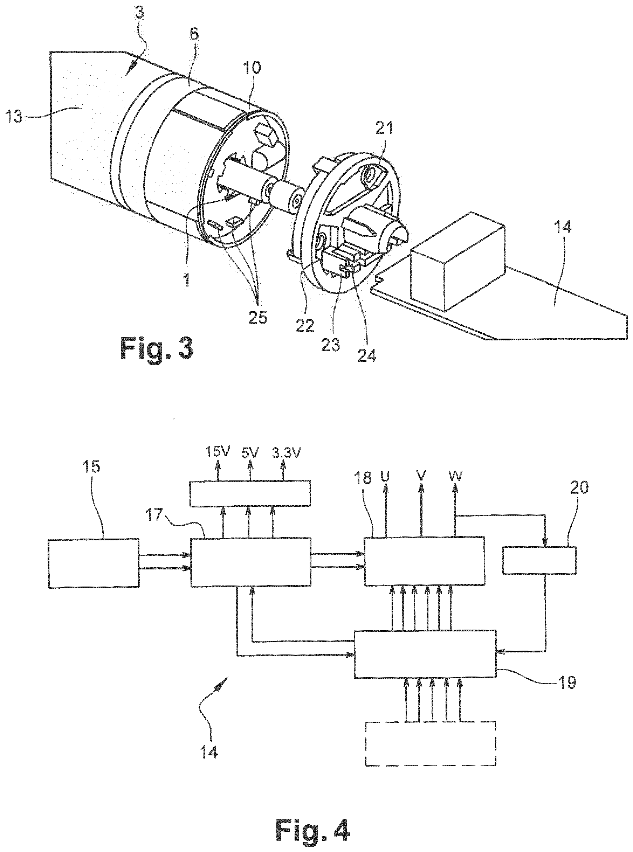

En référence aux figures 2 et 3, le stator 3 est constitué d'une pluralité de couronnes 13 coaxiales, assemblées les unes aux autres par boutonnage par exemple, ou par tout autre procédé bien connu de l'homme du métier. Chaque couronne 13, en référence aux figures 2 et 3, est constituée d'un anneau externe portant une pluralité de dents radiales en forme générale de T inversé s'étendant vers le centre de l'évidement central, ledit évidement central permettant le passage du rotor 1 constitué du cylindre en plastoferrite aimanté 2, emmanché et collé sur l'arbre 11, telle que décrite dans la demande de brevet français FR1463499 déposée par la Demanderesse.

Par ailleurs, en référence aux figures 3 et 4, le moteur électrique suivant l'invention comporte une carte électronique de commande 14 du moteur, et accessoirement de commande du frein 5, comprenant au moins un filtre de compatibilité électromagnétique dit CEM 15, , un circuit de redressement et de filtrage 17, un circuit comportant des commutateurs électroniques 18 afin de fournir la tension d'alimentation au moteur électrique et un microcontrôleur 19 apte à déterminer et transmettre les signaux de commande au circuit à commutateurs électroniques 18. On notera que le filtre CEM 15 consiste dans un filtre permettant d'empêcher les courants induits sur les câbles de pénétrer dans la carte électronique et de perturber les fonctions qui s'y trouvent. Ce filtre CEM 15 peut par exemple consister dans un filtrage fréquentiel et/ou un filtre temporel et/ou dans un écrêtage en tension ou dans tout autre filtre bien connu de l'homme du métier afin de supprimer les perturbations électromagnétiques en mode conduites et rayonnées.. Le circuit de redressement et de filtrage 17 permet d'assurer la tension du bus continu non représenté. On entend par « bus » l'ensemble des conducteurs, sous la forme de pistes de circuit, de la carte électronique de commande 14 qui relient les différents composants de ladite carte électronique. Ledit bus comporte de manière usuelle une piste négative dite Bus - et une piste positive dite Bus +.

Ledit circuit 14 comporte par ailleurs un shunt 20 consistant dans un ensemble de résistances de faibles valeurs pour mesurer les courants dans les phases du moteur. Ces mesures du courant dans les phases du moteur sont utiles pour assurer le contrôle du moteur au moyen du microcontrôleur 19. Par exemple, ledit microcontrôleur 19 comporte un programme à commande vectorielle qui est avantageusement basé sur un repère de référence lié au flux rotorique, ce qui permet d'améliorer les performances du moteur en régime dynamique.

De plus, on notera que le circuit de commande pourra consister dans un circuit de commande vectorielle ou dans tout autre circuit de commande bien connu de l'homme du métier tel qu'un circuit de commande classique fonctionnant suivant la méthode dites des six étapes.

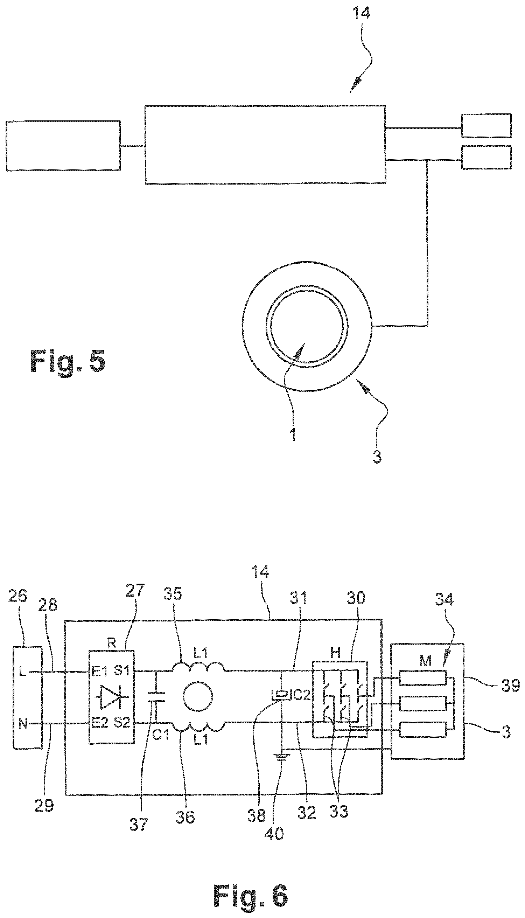

De manière particulièrement avantageuse, en référence à la figure 5, la masse du stator 3 est connectée électriquement à la piste négative Bus- de tension continue du bus de la carte électronique 14 afin de réduire les différents effets des perturbations électromagnétiques générées par le circuit électronique de pilotage du flux électromagnétique dans le stator, effets des perturbations électromagnétiques susceptibles d'altérer le circuit d'alimentation et/ou la carte électronique de commande. Ladite connexion électrique est réalisée par un conducteur électrique dont les extrémités sont connectées respectivement à la partie métallique du stator 3 et à la piste négative (Bus-) du bus de la carte électronique 14. Ainsi, en reliant la tension négative du bus (Bus-) délivrée par la carte électronique 14 sur la partie métallique du stator 3, les courants induits par le circuit électronique de pilotage sont dissipés dans les tôles du stator réduisant ainsi les effets néfastes sur l'environnement.

Il est bien évident que la connexion de la masse du stator 3 au Bus- de la carte électronique 14 pourra être substituée par tout autre moyen équivalent de décharge des perturbations électromagnétiques générées par le circuit électronique de pilotage sans pour autant sortir du cadre de l'invention.

Dans cet exemple particulier de réalisation, en référence à la figure 3, le moteur suivant l'invention comporte un connecteur 21 se présentant sous la forme d'un flasque cylindrique obtenu dans un matériau isolant, apte à être solidarisé au corps du réducteur 10 et/ou du stator 3, et comportant des trous traversants 22 débouchant entre des pattes de clipsage 23, alignées et recevant des bornes conductrices 24, lesdites bornes conductrices 24 entrant en contact avec les pistes de la carte électronique 14 lorsque cette dernière est clipsée entre les pattes de clipsage 23 et l'une des bornes étant connectée à la partie métallique du stator 3 par un conducteur électrique, non représenté sur la figure 4. Les bornes conductrices 24 comportent à leurs extrémités des broches, non représenté sur la figure 4, aptes à recevoir des fiches plates 25 faisant saillie du réducteur 10 et respectivement les pistes de la carte électronique 14.

Selon un premier mode de réalisation, en référence à la figure 6, la carte électronique 14 est connectée à un réseau électrique 26 consistant en un réseau monophasé schématiquement représenté par la phase L et le neutre N et elle comprend un circuit redresseur 27 dont les entrées E1 et E2 sont connectées à la phase L et au neutre N respectivement du réseau électrique 26 par des pistes conductrices 28 et respectivement 29. Les sorties S1 et S2 sont connectées à un module de commutation (H) 30 au moyen de pistes conductrices 31 et respectivement 32. Ledit module de commutation 30 est constitué d'une pluralité d'interrupteurs 33 montés en série et en parallèle avec les bornes du moteur électrique 34. Ledit circuit redresseur 27 consiste en un pont de diodes.

Par ailleurs, la carte électronique 14 comporte une self L1 de mode commun 35 positionnée sur les pistes conductrices 31 et 32 respectivement entre les sorties S1 et S2 du circuit redresseur 27 et le module de commutation 30. Cette self de mode commun 35 permet de réduire les perturbations électromagnétiques conduites en mode commun. Un condensateur C1 37 est connecté entre les sorties S1 et S2 du circuit redresseur 27 et les entrées de la self de mode commun 35, ledit condensateur 37 permettant de réduire les perturbations électromagnétiques conduites en mode différentiel.

La carte électronique 14 comporte un second condensateur C2 38 connecté entre les sorties de la self de mode commun 35 et le module de commutation 30, ledit second condensateur 38 procurant une capacité réservoir pour fournir une tension continue au moteur électrique 34.

De manière particulièrement avantageuse, le circuit magnétique 39 du moteur électrique 34, à savoir la masse du stator dudit moteur, est relié à la masse 40 du circuit de la carte électronique 14, ladite masse correspondant à la piste négative (Bus-) de la carte électronique 14. De cette manière, les perturbations électromagnétiques rayonnées par le circuit électronique de pilotage sont efficacement réduites.

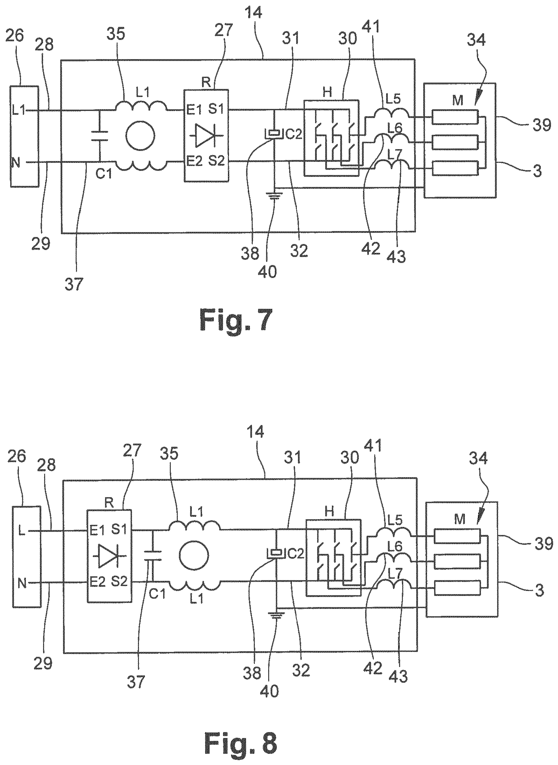

Selon une première variante d'exécution, en référence à la figure 7, la carte électronique 14 est, de la même manière que précédemment, connectée à un réseau électrique 26 consistant en un réseau monophasé schématiquement représenté par la phase L et le neutre N. Elle comprend un circuit redresseur 27 dont les entrées E1 et E2 sont connectées aux sorties d'une self L1 de mode commun 35, les entrées de la self de mode commun étant connectées à la phase L et au neutre N respectivement du réseau électrique 26 par des pistes conductrices 28 et respectivement 29. Les sorties S1 et S2 sont connectées à un module de commutation (H) 30 au moyen de pistes conductrices 31 et respectivement 32. Ledit module de commutation 30 est constitué d'une pluralité d'interrupteurs 33 montés en série et en parallèle avec les bornes du moteur électrique 34.

Par ailleurs, un condensateur C1 37 est connecté entre les entrées de la self de mode commun 35. La carte électronique 14 comporte un second condensateur C2 38 connecté entre les sorties du circuit redresseur 27 et le module de commutation 30.

De manière particulièrement avantageuse, le circuit magnétique 39 du moteur électrique 34, à savoir la masse du stator dudit moteur, est relié à la masse 40 du circuit de la carte électronique 14, ladite masse correspondant à la piste négative (Bus-) de la carte électronique 14. De cette manière, les perturbations électromagnétiques rayonnées par le circuit électronique de pilotage sont efficacement réduites.

La carte électronique 14 diffère également de celle précédemment décrite par le fait qu'elle comporte des selfs 41,42 et 43 (L5, L6,L7) connectées entre le module de commutation 30 et les bornes du moteur électrique 34 afin d'aider à filtrer les perturbations électromagnétiques.

Selon une seconde variante d'exécution, en référence à la figure 8, la carte électronique 14 est connectée à un réseau électrique 26 consistant en un réseau monophasé schématiquement représenté par la phase L et le neutre N et elle comprend un circuit redresseur 27 dont les entrées E1 et E2 sont connectées à la phase L et au neutre N respectivement du réseau électrique 26 par des pistes conductrices 28 et respectivement 29. Les sorties S1 et S2 sont connectées à un module de commutation (H) 30 au moyen de pistes conductrices 31 et respectivement 32. Ledit module de commutation 30 est constitué d'une pluralité d'interrupteurs 33 montés en série et en parallèle avec les bornes du moteur électrique 34. Ledit circuit redresseur 27 consiste en un pont de diodes.

Par ailleurs, la carte électronique 14 comporte une self L1 de mode commun 35 positionnée sur les pistes conductrices 31 et 32 respectivement entre les sorties S1 et S2 du circuit redresseur 27 et le module de commutation 30. Cette self de mode commun 35 permet de réduire les perturbations électromagnétiques conduites en mode commun. Un condensateur C1 37 est connecté entre les sorties S1 et S2 du circuit redresseur 27 et les entrées de la self de mode commun 35, ledit condensateur 37 permettant de réduire les perturbations électromagnétiques conduites en mode différentiel.

La carte électronique 14 comporte un second condensateur C2 38 connecté entre les sorties de la self de mode commun 35 et le module de commutation 30, ledit second condensateur 38 procurant une capacité réservoir pour fournir une tension continue au moteur électrique 34.

De manière particulièrement avantageuse, le circuit magnétique 39 du moteur électrique 34, à savoir la masse du stator dudit moteur, est relié à la masse 40 du circuit de la carte électronique 14, ladite masse correspondant à la piste négative (Bus-) de la carte électronique 14. De cette manière, les perturbations électromagnétiques rayonnées par le circuit électronique de pilotage sont efficacement réduites.

La carte électronique 14 diffère de celle précédemment décrite à la figure 6 par le fait qu'elle comporte des selfs 41,42 et 43 (L5, L6,L7) connectées entre le module de commutation 30 et les bornes du moteur électrique 34 afin d'aider à filtrer les perturbations électromagnétiques.

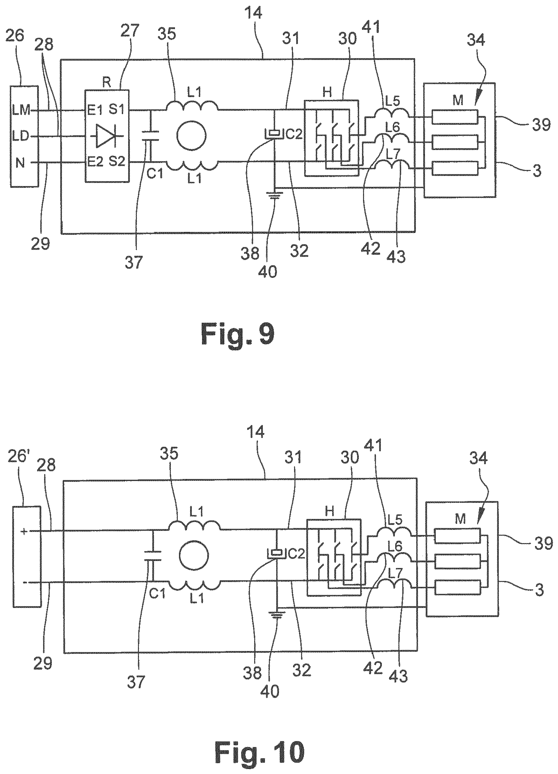

Selon une troisième variante d'exécution, en référence à la figure 9, la carte électronique 14 est, de la même manière que celle décrite à la figure 8, connectée à un réseau électrique 26 consistant en un réseau monophasé et elle comprend un circuit redresseur 27 dont les entrées E1 et E2 sont connectées à la phase L et au neutre N respectivement du réseau électrique 26 par des pistes conductrices 28 et respectivement 29. Les sorties S1 et S2 sont connectées à un module de commutation (H) 30 au moyen de pistes conductrices 31 et respectivement 32. Ledit module de commutation 30 est constitué d'une pluralité d'interrupteurs 33 montés en série et en parallèle avec les bornes du moteur électrique 34.

Par ailleurs, la carte électronique 14 comporte une self L1 de mode commun 35 positionnées sur les pistes conductrices 31 et 32 respectivement entre les sorties S1 et S2 du circuit redresseur 27 et le module de commutation 30. Un condensateur C1 37 est connecté entre les sorties S1 et S2 du circuit redresseur 27 et les entrées de la self de mode commun 35. La carte électronique 14 comporte un second condensateur C2 38 connecté entre les sorties de la self de mode commun 35 et le module de commutation 30.

La carte électronique 14 diffère de celle précédemment décrite à la figure 8 par le fait que la source d'alimentation comporte deux phases LM et LD qui permettent avantageusement de déterminer le sens de rotation du moteur.

De manière particulièrement avantageuse, le circuit magnétique 39 du moteur électrique 34, à savoir la masse du stator dudit moteur, est relié à la masse 40 du circuit de la carte électronique 14, ladite masse correspondant à la piste négative (Bus-) de la carte électronique 14. De cette manière, les perturbations électromagnétiques rayonnées par le circuit électronique de pilotage sont efficacement réduites.

Accessoirement, la carte électronique 14 comporte des selfs 41,42 et 43 (L5, L6,L7) connectées entre le module de commutation 30 et les bornes du moteur électrique 34 afin d'aider à filtrer les perturbations électromagnétiques.

Selon une dernière variante d'exécution, en référence à la figure 10, la carte électronique 14 est identique à celle précédemment décrite en référence à la figure 9 à l'exception du fait qu'elle ne comporte pas de circuit redresseur 27 et que le réseau électrique 26 consistant en un réseau monophasé a été substitué par une source d'alimentation en courant continu 26'.

On notera que, dans les différentes variantes d'exécution de la carte électronique 14, cette dernière pourra comporter plusieurs inductances (self) ou aucune inductance sans pour autant sortir du cadre de l'invention.

Il est bien évident que les exemples que l'on vient de donner ne sont que des illustrations particulières et en aucun cas limitatif quant au domaine d'application de l'invention.

## Revendications

1. Machine synchrone à aimants permanents comportant au moins un rotor (1) constitué d'au moins un aimant permanent (2) solidaire d'un arbre (11) s'étendant à travers un stator (3) portant une pluralité de bobines, ladite machine synchrone étant pilotée par une carte électronique (14) de commande, et des moyens de décharge du courant électromoteur généré par le circuit électronique de pilotage consistant en une connexion électrique du circuit magnétique de la machine avec la masse de la carte électronique (14) de commande de ladite machine, la carte électronique (14) comportant au moins un circuit redresseur (27) et un module de commutation (30) constitué d'une pluralité d'interrupteurs (33) montés en série et en parallèle avec les bornes de la machine (34), la machine synchrone comprenant en outre un connecteur (21) se présentant sous la forme d'un flasque obtenu dans un matériau isolant, apte à être solidarisé au corps du stator (3), et comportant des trous traversants (22) débouchant entre des pattes de clipsage (23), alignées et comprenant des bornes conductrices (24), lesdites bornes conductrices (24) entrant en contact avec les pistes de la carte électronique (14) lorsque cette dernière est clipsée entre les pattes de clipsage (23) et l'une des bornes conductrices (24) étant connectée à la partie métallique du stator (3) par un conducteur électrique (25).

2. Machine synchrone à aimants permanents selon la revendication 1 ***caractérisée* en ce que** ladite connexion électrique du circuit magnétique de la machine avec la masse de ladite carte électronique (14) est obtenue par un conducteur électrique dont les extrémités sont connectées respectivement à la partie métallique du stator (3) et à la piste négative (Bus-) du bus de la carte électronique (14), ladite piste négative du bus formant la masse.

3. Machine synchrone à aimants permanents selon l'une quelconque des revendications 1 et 2 ***caractérisée* en ce que** la carte électronique (14) comporte au moins un circuit redresseur (27) dont les entrées E1 et E2 sont connectées à la phase L et au neutre N respectivement d'un réseau électrique monophasé (26), un module de commutation (H) (30) connecté aux sorties S1 et S2 du circuit redresseur (27) au moyen de pistes conductrices (31) et respectivement (32), au moins une self L1 de mode commun (35) positionnée sur les pistes conductrices (31) et (32) respectivement entre les sorties S1 et S2 du circuit redresseur (27) et le module de commutation (30), un premier condensateur C1 (37) connecté entre les sorties S1 et S2 du circuit redresseur (27) et les entrées de la self de mode commun (35), un second condensateur C2 (38) connecté entre les sorties de la self de mode commun (35) et le module de commutation (30) et des moyens pour relier le circuit magnétique (39) de la machine (34), à savoir la masse du stator (3) de ladite machine (34), à la masse (40) du circuit de la carte électronique (14), ladite masse correspondant à la piste négative (Bus-) de la carte électronique (14).

4. Machine synchrone à aimants permanents selon l'une quelconque des revendications 1 et 2 ***caractérisée* en ce que** la carte électronique (14) comporte au moins un circuit redresseur (27) dont les entrées E1 et E2 sont connectées aux sorties d'au moins une self L1 de mode commun (35), les entrées de la self de mode commun (35) étant connectées à la phase L et au neutre N respectivement d'un réseau électrique (26) par des premières pistes conductrices (28) et respectivement (29), un module de commutation (H) (30) connecté aux sorties S1 et S2 du circuit redresseur (27) au moyen de deuxièmes pistes conductrices (31) et respectivement (32), un premier condensateur C1 (37) connecté entre les premières pistes conductrices (28, 29) , un second condensateur C2 (38) connecté entre les sorties du circuit redresseur (27) et le module de commutation (30) et des moyens pour relier le circuit magnétique (39) de la machine (34), à savoir la masse du stator (3) de ladite machine (34), à la masse (40) du circuit de la carte électronique (14), ladite masse correspondant à la piste négative (Bus-) de la carte électronique (14).

5. Machine synchrone à aimants permanents selon l'une quelconque des revendications 1 et 2 ***caractérisée* en ce que** la carte électronique (14) comporte des moyens de raccordement à une source d'alimentation en courant continu (26'), un module de commutation (H) (30) connecté aux bornes de la source d'alimentation en courant continu (26') au moyen de pistes conductrices (31) et respectivement (32), au moins une self L1 de mode commun (35) positionnée sur les pistes conductrices (31) et (32) respectivement entre les bornes de la source d'alimentation en courant continu (26') et le module de commutation (30), un premier condensateur C1 (37) connecté entre les bornes de la source d'alimentation en courant continu (26') et les entrées de la self de mode commun (35), un second condensateur C2 (38) connecté entre les sorties de la self de mode commun (35) et le module de commutation (30) et des moyens pour relier le circuit magnétique (39) de la machine (34), à savoir la masse du stator (3) de ladite machine (34), à la masse (40) du circuit de la carte électronique (14), ladite masse correspondant à la piste négative (Bus-) de la carte électronique (14).

6. Machine synchrone à aimants permanents selon l'une quelconque des revendications 3 à 5 ***caractérisée* en ce que** la carte électronique (14) comporte des selfs (40,41 et 42) connectées entre le module de commutation (30) et les bornes de la machine (34) afin d'aider à filtrer les perturbations électromagnétiques.

## Patentansprüche

1. Synchronmaschine mit Permanentmagneten, die mindestens einen Rotor (1) aufweist, der aus mindestens einem Permanentmagneten (2) besteht, der fest mit einer Welle (11) verbunden ist, die sich durch einen eine Vielzahl von Spulen tragenden Stator (3) hindurch erstreckt, wobei die Synchronmaschine von einer Steuerelektronikkarte (14) gesteuert wird, und Einrichtungen zur Entladung des vom elektronischen Steuerschaltkreis erzeugten elektromotorischen Stroms bestehend aus einer elektrischen Verbindung des Magnetkreises der Maschine mit der Masse der Steuerelektronikkarte (14) der Maschine, wobei die Elektronikkarte (14) mindestens einen Gleichrichterschaltkreis (27) und ein Schaltmodul (30) aufweist, das aus einer Vielzahl von Schaltern (33) besteht, die mit den Anschlüssen der Maschine (34) in Reihe und parallel geschaltet sind, wobei die Synchronmaschine außerdem einen Verbinder (21) enthält, der in Form eines aus einem Isoliermaterial erhaltenen Flanschs vorliegt, der mit dem Körper des Stators (3) fest verbunden werden kann und Durchgangslöcher (22) aufweist, die zwischen Einrastlaschen (23) münden, die ausgerichtet sind und leitende Anschlüsse (24) enthalten, wobei die leitenden Anschlüsse (24) mit den Spuren der Elektronikkarte (14) in Kontakt kommen, wenn letztere zwischen den Einrastlaschen (23) eingerastet wird, und einer der leitenden Anschlüsse (24) durch einen elektrischen Leiter (25) mit dem metallischen Teil des Stators (3) verbunden ist.

2. Synchronmaschine mit Permanentmagneten nach Anspruch 1, **dadurch gekennzeichnet, dass** die elektrische Verbindung des Magnetkreises der Maschine mit der Masse der Elektronikkarte (14) durch einen elektrischen Leiter erhalten wird, dessen Enden mit dem metallischen Teil des Stators (3) bzw. der negativen Spur (Bus-) des Busses der Elektronikkarte (14) verbunden sind, wobei die negative Spur des Busses die Masse bildet.

3. Synchronmaschine mit Permanentmagneten nach einem der Ansprüche 1 und 2, **dadurch gekennzeichnet, dass** die Elektronikkarte (14) mindestens einen Gleichrichterschaltkreis (27), dessen Eingänge E1 und E2 mit der Phase L bzw. mit dem Nullleiter N eines einphasigen Stromnetzes (26) verbunden sind, ein Schaltmodul (H) (30), das mit den Ausgängen S1 und S2 des Gleichrichterschaltkreises (27) mittels Leiterbahnen (31) bzw. (32) verbunden ist, mindestens eine Gleichtakt-Drosselspule L1 (35), die auf den Leiterbahnen (31) bzw. (32) zwischen den Ausgängen S1 und S2 des Gleichrichterschaltkreises (27) und dem Schaltmodul (30) positioniert ist, einen ersten Kondensator C1 (37), der zwischen den Ausgängen S1 und S2 des Gleichrichterschaltkreises (27) und den Eingängen der Gleichtakt-Drosselspule (35) verbunden ist, einen zweiten Kondensator C2 (38), der zwischen den Ausgängen der Gleichtakt-Drosselspule (35) und dem Schaltmodul (30) verbunden ist, und Einrichtungen aufweist, um den Magnetkreis (39) der Maschine (34), d.h. die Masse des Stators (3) der Maschine (34), mit der Masse (40) des Schaltkreises der Elektronikkarte (14) zu verbinden, wobei die Masse der negativen Spur (Bus-) der Elektronikkarte (14) entspricht.

4. Synchronmaschine mit Permanentmagneten nach einem der Ansprüche 1 und 2, **dadurch gekennzeichnet, dass** die Elektronikkarte (14) mindestens einen Gleichrichterschaltkreis (27), dessen Eingänge E1 und E2 mit den Ausgängen mindestens einer Gleichtakt-Drosselspule L1 (35) verbunden sind, wobei die Eingänge der Gleichtakt-Drosselspule (35) mit der Phase L bzw. dem Nullleiter N eines Stromnetzes (26) durch erste Leiterbahnen (28) bzw. (29) verbunden sind, ein Schaltmodul (H) (30), das mit den Ausgängen S1 und S2 des Gleichrichterschaltkreises (27) mittels zweiter Leiterbahnen (31) bzw. (32) verbunden ist, einen ersten Kondensator C1 (37), der zwischen den ersten Leiterbahnen (28, 29) verbunden ist, einen zweiten Kondensator C2 (38), der zwischen den Ausgängen des Gleichrichterschaltkreises (27) und dem Schaltmodul (30) verbunden ist, und Einrichtungen aufweist, um den Magnetkreis (39) der Maschine (34), d.h. die Masse des Stators (3) der Maschine (34), mit der Masse (40) des Schaltkreises der Elektronikkarte (14) zu verbinden, wobei die Masse der negativen Spur (Bus-) der Elektronikkarte (14) entspricht.

5. Synchronmaschine mit Permanentmagneten nach einem der Ansprüche 1 und 2, **dadurch gekennzeichnet, dass** die Elektronikkarte (14) Anschlusseinrichtungen an eine Gleichstrom-Versorgungsquelle (26'), ein Schaltmodul (H) (30), das mit den Anschlüssen der Gleichstrom-Versorgungsquelle (26') mittels Leiterbahnen (31) bzw. (32) verbunden ist, mindestens eine Gleichtakt-Drosselspule L1 (35), die auf den Leiterbahnen (31) bzw. (32) zwischen den Anschlüssen der Gleichstrom-Versorgungsquelle (26') und dem Schaltmodul (30) positioniert ist, einen ersten Kondensator C1 (37), der zwischen den Anschlüssen der Gleichstrom-Versorgungsquelle (26') und den Eingängen der Gleichtakt-Drosselspule (35) verbunden ist, einen zweiten Kondensator C2 (38), der zwischen den Ausgängen der Gleichtakt-Drosselspule (35) und dem Schaltmodul (30) verbunden ist, und Einrichtungen aufweist, um den Magnetkreis (39) der Maschine (34), d.h. die Masse des Stators (3) der Maschine (34), mit der Masse (40) des Schaltkreises der Elektronikkarte (14) zu verbinden, wobei die Masse der negativen Spur (Bus-) der Elektronikkarte (14) entspricht.

6. Synchronmaschine mit Permanentmagneten nach einem der Ansprüche 3 bis 5, **dadurch gekennzeichnet, dass** die Elektronikkarte (14) Drosselspulen (40, 41 und 42) aufweist, die zwischen dem Schaltmodul (30) und den Anschlüssen der Maschine (34) verbunden sind, um das Filtern der elektromagnetischen Störungen zu unterstützen.

## Claims

1. Synchronous machine with permanent magnets comprising at least one rotor (1) composed of at least one permanent magnet (2) secured to a shaft (11) extending through a stator (3) bearing a plurality of coils, said synchronous machine being driven by a control electronic circuit board (14), and means for discharging the electromotive current generated by the electronic driver circuit consisting in an electrical connection of the magnetic circuit of the machine with the ground of the control electronic circuit board (14) of said machine, the electronic circuit board (14) comprising at least a rectifier circuit (27) and a switching module (30) composed of a plurality of switches (33) mounted in series and in parallel with the terminals of the machine (34), the synchronous machine further comprising a connector (21) taking the form of a flange obtained from an insulating material, capable of being secured to the body of the stator (3), and comprising through-holes (22) emerging between clipping lugs (23), aligned and comprising conductive terminals (24), said conductive terminals (24) coming into contact with the tracks of the electronic circuit board (14) when the latter is clipped between the clipping lugs (23) and one of the conductive terminals (24) being connected to the metal part of the stator (3) by an electrical conductor (25).

2. Synchronous machine with permanent magnets according to Claim 1 ***characterized* in that** said electrical connection of the magnetic circuit of the machine with the ground of said electronic circuit board (14) is obtained by an electrical conductor whose ends are connected respectively to the metal part of the stator (3) and to the negative track (Bus-) of the bus of the electronic circuit board (14), said negative track of the bus forming the ground.

3. Synchronous machine with permanent magnets according to either one of Claims 1 and 2 ***characterized* in that** the electronic circuit board (14) comprises at least one rectifier circuit (27) whose inputs E1 and E2 are connected to the phase L and the neutral N respectively of a single-phase electrical network (26), a switching module (H) (30) connected to the outputs S1 and S2 of the rectifier circuit (27) by means of conductive tracks (31) and respectively (32), to at least one common mode inductor L1 (35) positioned on the conductive tracks (31) and (32) respectively between the outputs S1 and S2 of the rectifier circuit (27) and the switching module (30), a first capacitor C1 (37) connected between the outputs S1 and S2 of the rectifier circuit (27) and the inputs of the common mode inductor (35), a second capacitor C2 (38) connected between the outputs of the common mode inductor (35) and the switching module (30) and means for linking the magnetic circuit (39) of the machine (34), namely the ground of the stator (3) of said machine (34), to the ground (40) of the circuit of the electronic circuit board (14), said ground corresponding to the negative track (Bus-) of the electronic circuit board (14).

4. Synchronous machine with permanent magnets according to either one of Claims 1 and 2 ***characterized* in that** the electronic circuit board (14) comprises at least one rectifier circuit (27) whose inputs E1 and E2 are connected to the outputs of at least one common mode inductor L1 (35), the inputs of the common mode inductor (35) being connected to the phase L and to the neutral N respectively of an electrical network (26) by first conductive tracks (28) and respectively (29), a switching module (H) (30) connected to the outputs S1 and S2 of the rectifier circuit (27) by means of second conductive tracks (31) and respectively (32), a first capacitor C1 (37) connected between the first conductive tracks (28, 29), a second capacitor C2 (38) connected between the outputs of the rectifier circuit (27) and the switching module (30) and means for linking the magnetic circuit (39) of the machine (34), namely the ground of the stator (3) of said machine (34), to the ground (40) of the circuit of the electronic circuit board (14), said ground corresponding to the negative track (Bus-) of the electronic circuit board (14).

5. Synchronous machine with permanent magnets according to either one of Claims 1 and 2 ***characterized* in that** the electronic circuit board (14) comprises means for connecting to a DC current power source (26'), a switching module (H) (30) connected to the terminals of the DC current power source (26') by means of conductive tracks (31) and respectively (32), at least one common mode inductor L1 (35) positioned on the conductive tracks (31) and (32) respectively between the terminals of the DC current power source (26') and the switching module (30), a first capacitor C1 (37) connected between the terminals of the DC current power source (26') and the inputs of the common mode inductor (35), a second capacitor C2 (38) connected between the outputs of the common mode inductor (35) and the switching module (30) and means for linking the magnetic circuit (39) of the machine (34), namely the ground of the stator (3) of said machine (34), to the ground (40) of the circuit of the electronic circuit board (14), said ground corresponding to the negative track (Bus-) of the electronic circuit board (14).

6. Synchronous machine with permanent magnets according to any one of Claims 3 to 5 ***characterized* in that** the electronic circuit board (14) comprises inductors (40, 41 and 42) connected between the switching module (30) and the terminals of the machine (34) in order to assist in filtering the electromagnetic disturbances.
